# FASCICULE DE BREVET EUROPEEN

(11) **EP 3 781 792 B1**
(45) Date de publication et mention de la délivrance du brevet: **22.11.2023**
(21) Numéro de dépôt: 19742423.7
(22) Date de dépôt: 15.04.2019
(51) Int. Cl.: F01D 5/28, F01D 9/04, F01D 25/24

(54) **DISTRIBUTEUR EN CMC AVEC REPRISE D'EFFORT PAR UNE PINCE ÉTANCHE**
KERAMISCHE LEITSCHAUFEL MIT EINER GEDICHTETEN ZANGE UM SPANNUNGEN ABZUFEDERN
DISTRIBUTOR MADE OF CMC, WITH STRESS RELIEF PROVIDED BY A SEALED CLAMP

(30) Priorité: 17.04.2018 FR 1853352
(43) Date de publication de la demande: 24.02.2021
(73) Titulaire: SAFRAN AIRCRAFT ENGINES, 75015 Paris (FR)
(72) Inventeur: JARROSSAY, Clément, 77550 MOISSY-CRAMAYEL (FR); CONGRATEL, Sébastien, Serge, Francis, 77550 MOISSY-CRAMAYEL (FR); DANIS, Antoine, Claude, Michel, Etienne, 77550 MOISSY-CRAMAYEL (FR); DUFFAU, Clément, Jean, Pierre, 77550 MOISSY-CRAMAYEL (FR); QUENNEHEN, Lucien, Henri, Jacques, 77550 MOISSY-CRAMAYEL (FR)
(74) Mandataire: Cabinet Beau de Loménie
(86) Numéro de dépôt international: PCT/FR2019/050880
(87) Numéro de publication internationale: WO 2019/202249

(56) Documents cités:
- WO-A1-2013/079859
- US-A1- 2015 089 957

## Description

### Arrière-plan de l'invention

L'invention concerne des turbomachines, notamment des turbomoteurs aéronautiques ou des turbines industrielles, et plus particulièrement un étage distributeur de turbine en matériau composite à matrice céramique ou à matrice au moins partiellement en céramique, désigné ci-après par matériau CMC.

Le domaine d'application de l'invention est notamment celui des moteurs aéronautiques à turbine à gaz. L'invention est toutefois applicable à d'autres turbomachines, par exemple des turbines industrielles.

L'amélioration des performances des turbomachines et la réduction de leurs émissions polluantes conduit à envisager des températures de fonctionnement de plus en plus élevées.

Pour des éléments de parties chaudes de turbomachines, il a donc été proposé d'utiliser des matériaux composites à matrice céramique noté CMC par la suite.

Les matériaux CMC sont typiquement formés d'un renfort fibreux en fibres réfractaires, telles que des fibres de carbone ou de céramique, densifié par une matrice en céramique ou au moins partiellement en céramique.

Ces matériaux possèdent des propriétés thermo-structurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011/080443 décrivent la réalisation d'aubes de roues mobiles de turbomachines en CMC à plate-forme et talon intégrés. L'utilisation de matériaux CMC pour des distributeurs de turbine a aussi été proposée, notamment dans les documents WO 2010/146288, FR 2 979 662 et EP 2 443 318. WO 2013/079859 A1 montre les caractéristiques techniques du préambule de la revendication indépendante 1.

Un étage distributeur de turbine métallique traditionnel présente une forme de couronne composée de plusieurs secteurs assemblés, chaque secteur comprenant une plateforme intérieure, une plateforme extérieure et une pluralité de pales s'étendant entre les plateformes intérieure et extérieure et solidaires de celles-ci. Les plateformes intérieures juxtaposées forment une virole intérieure et les plateformes extérieures juxtaposées forment une virole extérieure. Les viroles intérieure et extérieure délimitent la veine d'écoulement de gaz dans l'étage distributeur.

Introduire un étage distributeur, par exemple un étage distributeur haute pression, en CMC permet d'augmenter la température maximale tolérée par rapport à un étage distributeur métallique, et ainsi de diminuer la quantité d'air de refroidissement utilisée. Cela permet ainsi d'augmenter les performances de la turbomachine.

Toutefois, le CMC, par ses propriétés très différentes du métal est plus sensible à certaines contraintes mécaniques. En effet le CMC présente une plus grande rigidité et une plus faible dilatation. Il se comporte mieux en compression, mais ses contraintes admissibles en traction sont plus faibles que celles du métal.

De plus, l'intégration dans un environnement métallique d'une pièce en CMC est délicate en raison des dilatations thermiques différentielles entre le CMC et le métal. Cela est d'autant plus délicat dans une turbomachine, et plus particulièrement dans une partie à haute pression de la turbomachine, car l'environnement est très chaud, ce qui exacerbe les différences de coefficients de dilatation thermique entre les matériaux, les efforts aérodynamiques subis par un étage distributeur haute pression étant en outre très élevés dans cette zone de turbine.

Il est connu des étages distributeurs en CMC comme par exemple un étage distributeur de turbine comportant une virole externe de support solidaire d'un carter, une virole interne de support, et une pluralité de secteurs d'anneau en CMC formant une couronne s'étendant entre la virole externe de support et la virole interne de support. Chaque secteur d'anneau est en appui sur les viroles interne et externe de support et comporte une plateforme intérieure, une plateforme extérieure, et au moins une pale s'étendant entre la plateforme extérieure et la plateforme intérieure et solidaire de celles-ci.

Toutefois, il existe un besoin d'améliorer les solutions connues en ce qui concerne la solidarisation déterministe du secteur d'anneau en CMC avec la virole interne, notamment en termes de maintien au moins axial du secteur d'anneau et en termes de reprise des efforts aérodynamiques.

Par ailleurs, un important différentiel de pressions est exercé sur le carter sous l'étage distributeur dans la direction radiale. Ce carter sert à créer une étanchéité entre le rotor et le stator. Cet écart de pression est source d'un effort qui, s'il était exercé sur le CMC, serait trop élevé compte tenu des admissibles du matériau.

Il est connu également un étage distributeur tel que décrit ci-dessus et comportant en outre un mât de renforcement s'étendant radialement à l'intérieur des aubes entre les deux plateformes.

Cependant, une telle solution reprend aussi bien via le mât les efforts relatifs au différentiel de pression sous l'étage distributeur que les efforts aérodynamiques sur la couronne en CMC.

Il est aussi connu du document FR 3 011 271 un dispositif de connexion d'une partie fixe de turbomachine avec un pied de distributeur d'une turbine de cette turbomachine. Ce dispositif comprend un corps annulaire et deux brides amont et aval annulaires solidaires du corps et adaptées pour venir pincer le pied du distributeur. Au moins une des deux brides annulaires est interrompue en formant une fente de dilatation ou de rétractation sous l'effet d'une différence de températures internes du dispositif.

Le dispositif forme un système de fixation par pince pour lier mécaniquement le carter inter-turbines au premier étage distributeur de la turbine basse pression. Le système décrit comprend une virole, le corps, reliant les deux pinces entre elles. Cette pièce souple permet de compenser le mouvement axial du distributeur par rapport au carter, le mouvement axial étant provoqué en grande partie par l'effort des gaz de veine.

Cependant, un tel système ne permet pas de compenser les mouvements relatifs entre les pièces du distributeur, et notamment un écart de dilatation entre deux pièces tangentiellement voisines et non pas axialement voisines, l'écart de dilatation étant dû à la présence de matériau CMC au coefficient de dilatation plus faible que celui du métal.

Il existe donc un besoin d'améliorer le maintien déterministe du distributeur en CMC de cette solution.

### Objet et résumé de l'invention

L'invention vise à pallier les inconvénients mentionnés ci-dessus et à passer outre les difficultés mentionnées ci-dessus en proposant une turbine de turbomachine comprenant un étage distributeur de turbine au moins en partie en CMC dont le montage est simplifié et adapté pour maintenir ses secteurs d'anneau de façon déterministe tout en permettant aux secteurs de se déformer indépendamment des pièces métalliques en interface, et en garantissant une étanchéité satisfaisante entre la cavité sous le distributeur, c'est-à-dire la cavité radialement interne par rapport au distributeur, et la cavité aval, c'est-à-dire la cavité située axialement en aval du distributeur par rapport au sens du flux d'air.

Un objet de l'invention propose une turbine de turbomachine comprenant un carter et un étage distributeur de turbine, tel que décrit dans la revendication indépendante 1.

Selon une caractéristique générale de l'invention, la plateforme intérieure de chaque secteur comprend une première patte et une seconde patte s'étendant selon la direction radiale en saillie vers l'intérieur depuis respectivement une extrémité axiale amont et une extrémité axiale aval de la plateforme intérieure, et la virole interne de support comprend un épaulement s'étendant en saillie dans la direction radiale vers l'extérieur et étant positionné en amont et en butée dans la direction axiale contre ladite première patte, et une pince axialement en aval de l'épaulement et comportant deux mâchoires s'étendant dans la direction radiale vers l'extérieur et maintenues en contrainte l'une vers l'autre contre la seconde patte de la plateforme intérieure.

La fixation du secteur en CMC à la virole externe de support en métal permet de reprendre les efforts des gaz s'exerçant sur la pale et les plateformes.

L'étage distributeur permet ainsi de conserver une bonne tenue de chaque secteur en CMC par les pièces métalliques à chaud, et ce malgré les écarts de dilatation des matériaux tout en garantissant une bonne étanchéité entre la cavité sous distributeur et la cavité aval à l'aide notamment d'une pièce annulaire en une seule pièce. Le distributeur est maintenu du côté radialement interne grâce à une pince formée par les mâchoires du côté aval.

Le maintien de la plateforme intérieure des secteurs entre l'épaulement et la pince formée par les mâchoires de la virole interne permet d'appliquer une précontrainte sur le secteur en CMC à froid, ce qui permet de conserver le serrage à chaud, malgré la présence d'une dilatation différentielle entre le CMC du secteur et le métal des autres éléments.

La turbine, qui comprend ainsi une fixation radiale de chaque secteur en CMC à une virole métallique externe de support ainsi qu'un maintien axial à un élément de la structure de support comprenant la virole externe et la virole interne, permet ainsi d'avoir un maintien déterministe du distributeur sur le carter, ce qui permet de mieux maîtriser le positionnement et les déplacements, et donc, les jeux, cruciaux pour la performance du moteur.

Dans un premier aspect de la turbine, les mâchoires de la virole interne de support peuvent être maintenues ensemble à l'aide d'une vis traversant les deux mâchoires et coopérant avec un écrou.

Dans un deuxième aspect de la turbine, la virole interne de support comprend en outre des premières sections d'anneau en tôle et des secondes sections d'anneau en tôle insérées entre les deux mâchoires, chaque seconde patte de plateforme intérieure étant comprise selon la direction axiale entre une première et une seconde sections d'anneau en tôle.

Les premières et secondes sections d'anneau en tôle forment deux couronnes en tôle disposées de part et d'autre de la seconde patte de la plateforme intérieure des secteurs d'anneau qui permet de garantir une bonne étanchéité tout en préservant une certaine souplesse grâce aux fentes intersections, et ainsi éviter de soumettre chaque secteur en CMC à des contraintes trop élevées à froid.

Dans un troisième aspect de la turbine, les premières sections d'anneau en tôle forment de préférence une première couronne en tôle présentant des premiers espaces s'étendant radialement entre lesdites premières sections d'anneau en tôle et les secondes sections d'anneau en tôle forment une seconde couronne en tôle présentant des seconds espaces s'étendant radialement entre lesdites secondes sections d'anneau en tôle, les premiers espaces et les seconds espaces étant décalés selon la direction axiale.

L'entrelacement des premières sections et des secondes sections en tôle permet ainsi de garantir l'étanchéité au niveau des mâchoires qui maintiennent le distributeur.

Dans un quatrième aspect de la turbine, une première mâchoire des deux mâchoires est solidaire de l'épaulement de la virole interne de support via une portion centrale, et une seconde mâchoire des deux mâchoires comprend une couronne dotée de fentes radiales s'étendant sur au moins une partie de la longueur radiale de la couronne.

Les fentes radiales dans la couronne de la seconde mâchoire permettent d'augmenter la souplesse de la seconde mâchoire. En alignant ces fentes radiales avec les interstices séparant deux secteurs en CMC, la seconde mâchoire présente une souplesse accrue pour chaque secteur en CMC.

La seconde mâchoire peut être totalement sectorisée de manière à relâcher encore plus les contraintes.

Dans un cinquième aspect de la turbine, les fentes radiales de la seconde mâchoire sont décalées selon la direction axiale par rapport aux seconds espaces et/ou aux premiers espaces de manière à améliorer l'étanchéité de l'étage distributeur.

Dans un sixième aspect de la turbine, chaque fente radiale peut séparer deux sections d'anneau de l'étage distributeur.

Dans un septième aspect de la turbine, ladite au moins une pale de chaque secteur en CMC présente un profil creux définissant un logement interne s'étendant entre la plateforme intérieure et la plateforme extérieure, les plateformes intérieure et extérieure de chaque secteur présentent chacune un orifice communiquant avec ledit logement interne de ladite au moins une pale, et chaque secteur de l'étage distributeur comprend au moins un mât traversant lesdits orifices des plateformes et le logement interne de ladite au moins une pale, ledit mât étant fixé audit carter et en liaison avec ledit secteur d'anneau et ladite virole interne de support, la liaison pouvant être directe ou indirecte.

Comme évoqué plus haut, une difficulté supplémentaire est générée par le différentiel de pression entre l'amont et l'aval de la plateforme intérieure de l'étage distributeur et du carter qui y est rattaché. Ce carter sert à créer une étanchéité entre le rotor et le stator. La différence de pression peut atteindre une valeur entre 2 à 50 bars. Cela crée un effort important qui est une source de contraintes importantes, notamment dans la zone d'accroche, en générant un moment via le bras de levier qu'est la pale. Cet écart de pression est source d'un effort qui, s'il était exercé sur le CMC, serait trop élevé compte tenu des admissibles du matériau.

Le mât permet de fournir un moyen de fixation d'un secteur d'un étage distributeur en CMC par le haut, c'est-à-dire au carter, tout en minimisant le moment de flexion, dans la mesure où la longueur de flexion est diminuée de moitié environ de par le mât traversant le secteur annulaire, l'effort étant déjà fortement réduit de par le fait que l'étage distributeur selon l'invention ne reprend pas l'effort lié à la différence de pression sur la virole interne.

Chaque secteur de l'étage distributeur est ainsi maintenu de façon déterministe, c'est-à-dire de manière à éviter que le secteur se mette à vibrer et en maîtrisant sa position, et cela tout en permettant au secteur de se déformer sous les effets de la température et de la pression entre autre indépendamment des pièces métalliques en interface.

La turbine selon l'invention permet ainsi d'avoir un étage distributeur reprenant les efforts de différentiel de pression en veine sur la pale non pas par les éléments en CMC, mais par le mât métallique qui bénéficie d'un meilleur admissible que les éléments en CMC.

Dans un huitième aspect de la turbine, le mât peut comprendre au moins une portion en saillie s'étendant dans un plan transverse à la direction radiale selon laquelle le mât s'étend et en liaison avec la pale pour maintenir la pale en position.

Le manchon définit une rotule permettant de minimiser l'effort dû au moment aérodynamique sans modifier l'intégration du secteur dans la turbine. En effet, la rotule ainsi formée à l'intérieur de la pale laisse la pale libre de ses mouvements autour de l'axe définit par le mât.

Dans un neuvième aspect de la turbine, la plateforme intérieure de chaque secteur peut comprendre en outre une seconde patte radiale s'étendant en saillie dans la direction radiale vers l'intérieur depuis une extrémité aval de la plateforme intérieure, la plateforme intérieure étant fixée à la virole interne de support par pincement des première et seconde pattes radiales de la plateforme intérieure dans la direction axiale entre ledit épaulement de la virole interne de support et une pince comportant deux mâchoires s'étendant dans la direction radiale vers l'extérieur et maintenues en contrainte l'une vers l'autre contre la seconde patte radiale de la plateforme intérieure.

Dans une variante, la virole interne de support peut comprendre une couronne perforée comportant des orifices de réception d'une extrémité du mât, et une bague de maintien sur laquelle est montée la couronne.

Dans un dixième aspect de la turbine, le mât peut être creux et comprendre des perforations sur toute sa hauteur pour délivrer un flux d'air de refroidissement, le flux d'air étant acheminé à l'intérieur du mât depuis le carter.

Le mât peut être en matériau métallique de manière à offrir une bonne tenue mécanique, le mât reprenant tous les efforts aérodynamiques pour les transférer au carter.

Le mât peut être réalisé en tout autre matériau.

Chaque secteur peut comprendre une pluralité de pales dont au moins une comprend un mât.

Dans un onzième aspect de la turbine, la seconde portion de la plateforme extérieure, la pale et la première patte de la plateforme intérieure sont formées en une seule et même pièce de tissage de matériau composite à matrice céramique ce qui permet de renforcer la structure du secteur d'anneau.

La turbine peut en outre comprendre au moins un renfort disposé selon la direction radiale entre la première portion et la seconde portion de la plateforme extérieure, ledit au moins un renfort comprenant une première paroi en appui contre une face radialement externe de la première portion et une seconde paroi en appui contre une face radialement interne de la seconde portion, au moins un renfort étant fixé à la virole externe de support avec la seconde portion de la plateforme extérieure.

La région s'étendant radialement entre la première portion et la seconde portion est la plus sollicitée mécaniquement, le bras de levier des efforts de pression y étant maximal. Le renfort forme un épaississement de la plateforme dans cette région ce qui permet de la rigidifier et d'abaisser les contraintes qui y sont exercées.

La seconde portion de la plateforme extérieure peut être fixée à la virole externe de support à l'aide d'au moins un ensemble comprenant une vis et un écrou, la vis traversant la plateforme extérieure du secteur et la virole externe de support.

La seconde portion de la plateforme extérieure de chaque secteur peut comprendre au moins un élément de butée en rotation et la virole externe de support peut comprendre au moins un élément complémentaire de butée en rotation configuré pour coopérer avec un élément de butée en rotation de la plateforme extérieure.

La butée en rotation permet ainsi de faciliter le positionnement et l'assemblage de l'étage distributeur et de reprendre le moment autour de l'axe radial.

La butée en rotation peut être formée par un orifice dans la seconde portion de la plateforme extérieure de chaque secteur et, pour chaque orifice de plateforme extérieure, un ergot de centrage s'étendant radialement en saillie vers l'intérieur depuis la virole métallique externe, les ergots de centrage étant configurés pour coopérer chacun avec un orifice de plateforme extérieure pour maintenir le secteur en position dans une direction axiale et une direction circonférentielle de l'étage distributeur.

Dans une variante, la butée en rotation peut être formée par une encoche prévue dans la seconde portion de la plateforme extérieure de chaque secteur d'anneau et une butée s'étendant radialement en saillie vers l'intérieur depuis la virole métallique externe et configurée pour coopérer avec une desdites encoches.

La première portion de la plateforme extérieure peut comprendre une partie s'étendant en saillie vers l'extérieur dans la direction radiale depuis une extrémité amont de la plateforme extérieure.

Ladite partie radiale permet ainsi d'améliorer l'étanchéité de la veine d'écoulement de fluide.

L'invention a également pour objet, une turbomachine comprenant au moins une turbine de turbomachine telle que définie ci-dessus.

L'invention a aussi pour autre objet, un aéronef comprenant au moins une turbomachine tel que défini ci-dessus.

### Brève description des dessins.

L'invention sera mieux comprise à la lecture faite ci-après, à titre indicatif mais non limitatif, en référence aux dessins annexés sur lesquels :
- La figure 1 est une vue schématique d'un secteur d'anneau d'un étage distributeur dans un plan défini par la direction radiale et la direction axiale de l'anneau selon un premier mode de réalisation de l'invention ;
- La figure 2 présente une vue en coupe du secteur d'anneau de la figure 1 dans un plan défini par la direction axiale et la direction circonférentielles de l'étage distributeur ;
- La figure 3 présente une vue schématique en coupe du secteur d'anneau de la figure 1 dans un plan défini par la direction radiale et la direction axiale ;
- la figure 4 est une vue schématique éclatée du secteur d'anneau de la figure 1 ;

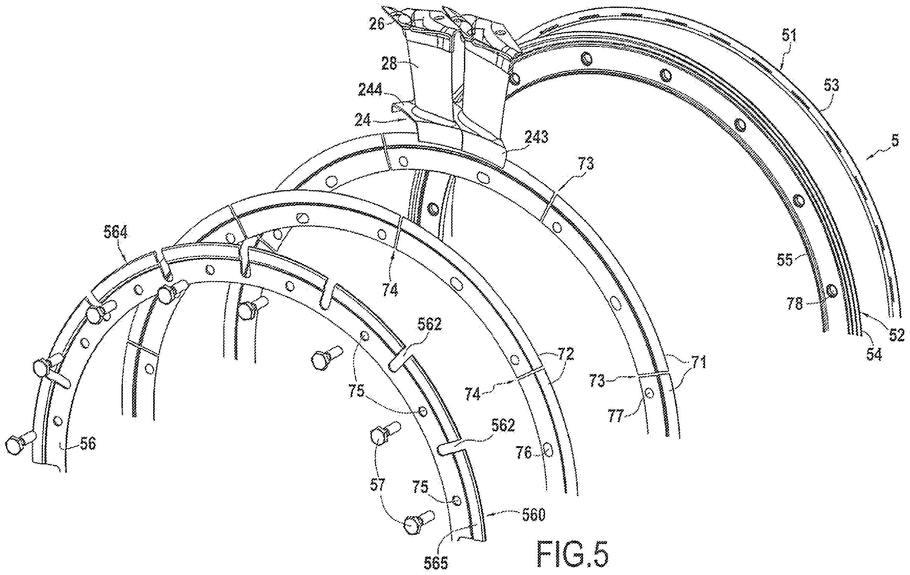

- la figure 5 selon un second mode de réalisation de l'invention.

### Description détaillée de modes de réalisation

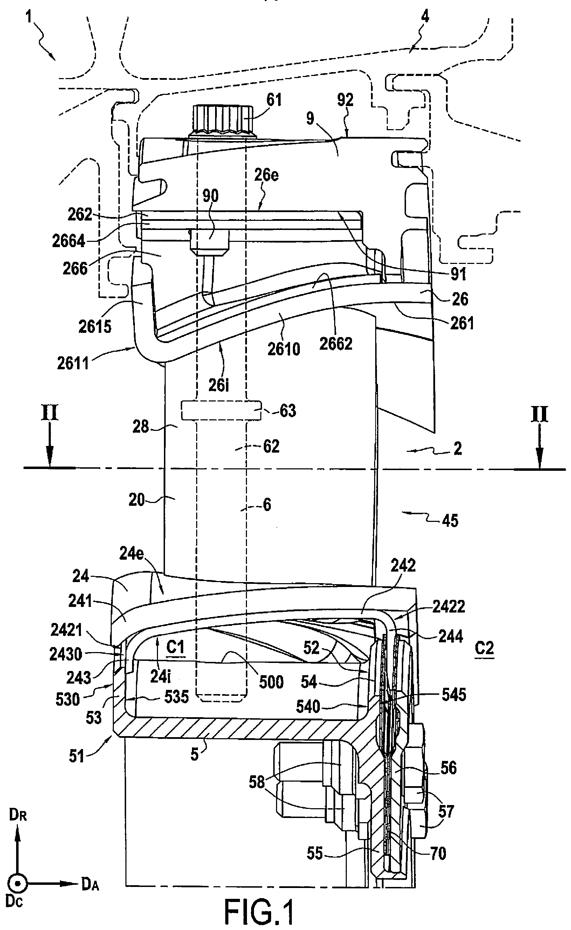

Sur la figure 1 est illustrée une vue schématique d'un secteur d'anneau d'un étage distributeur dans un plan défini par la direction radiale et la direction axiale de l'étage distributeur selon un premier mode de réalisation de l'invention.

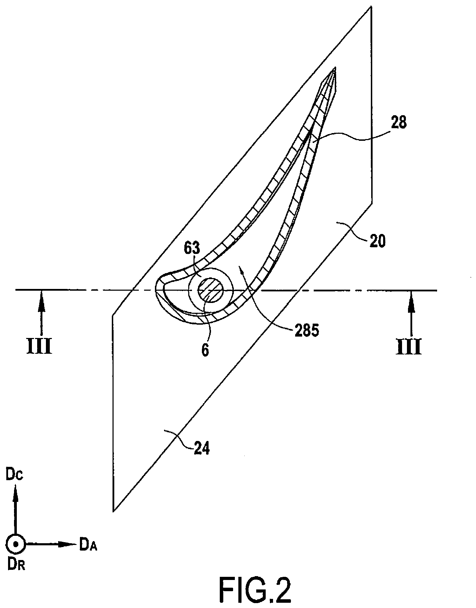

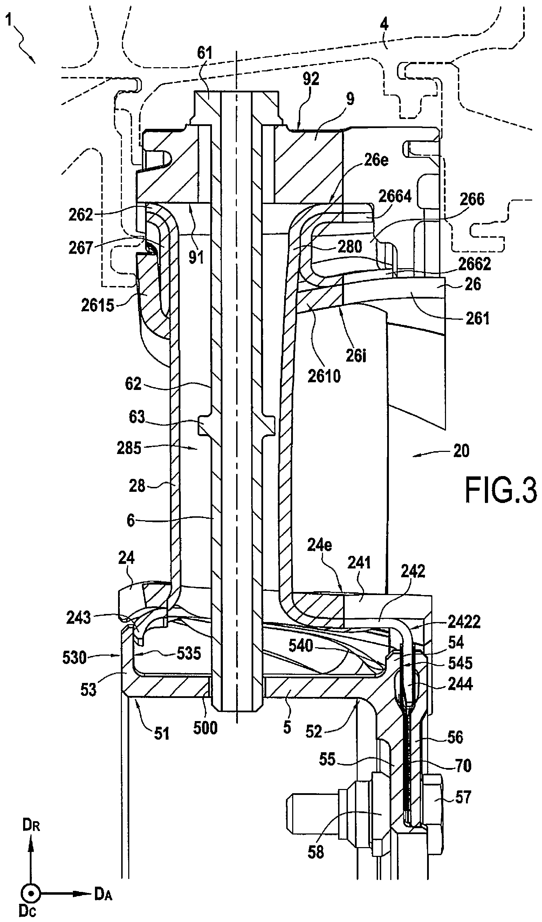

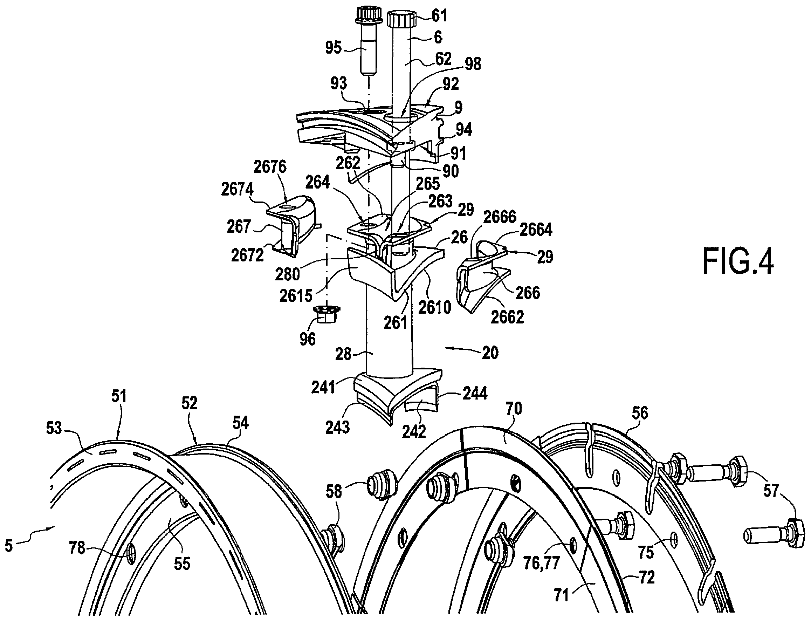

Les figures 2 à 4 présentent respectivement une vue en coupe dans un plan défini par la direction axiale et la direction circonférentielle, une vue schématique en coupe dans un plan défini par la direction radiale et la direction axiale et une vue schématique éclatée du secteur d'anneau de la figure 1.

Une turbine 1 haute pression d'une turbomachine, par exemple un turbomoteur aéronautique, telle que montrée partiellement sur la figure 1, comprend une pluralité d'étages distributeurs fixes 2 qui alternent avec des roues mobiles dans le sens d'écoulement, indiqué par une flèche sur la figure 1, du flux gazeux F dans la turbine 1 et qui sont montés dans un carter 4 de turbine.

Chaque roue mobile comprend une pluralité d'aubes ayant une virole intérieure, et au moins une pale s'étendant depuis la virole intérieure et liée à celle-ci. Du côté intérieur de la virole intérieure, l'aube se prolonge par un pied engagé dans un logement d'un disque. Du côté extérieur, le sommet des aubes est en regard d'un matériau abradable porté par un anneau pour assurer l'étanchéité aux sommets des aubes.

Dans tout le présent texte, les termes « intérieur » ou « interne » et « extérieur » ou « externe » sont utilisés en référence à la position ou l'orientation par rapport à l'axe de rotation de la turbine 1 qui définit la direction axiale D_{A} de la turbine 1.

Les aubes de la roue mobile peuvent être des aubes métalliques traditionnelles ou des aubes en matériau CMC obtenues par exemple comme décrit dans les documents WO 2010/061140, WO 2010/116066, WO 2011/080443.

Au moins l'un des étages distributeurs 2 de la turbine 1 est formé par réunion de plusieurs secteurs d'anneau 20 en matériau CMC pour former un anneau complet. La flèche D_{A} indique la direction axiale de l'étage distributeur 2 tandis que la flèche D_{R} indique la direction radiale de l'étage distributeur 2.

Chaque secteur 20 d'anneau de l'étage distributeur 2 comprend une plateforme intérieure 24, une plateforme extérieure 26 et une pale 28 s'étendant entre les plateformes intérieure et extérieure 24 et 26 et solidaires de celles-ci. En variante, plusieurs pales pourraient s'étendre entre les plateformes intérieure et extérieure d'un même secteur de distributeur. Une fois assemblés avec le carter 4 de la turbine 1, les secteurs 20 forment une unique couronne de distributeurs 2 présentant une virole intérieure formée par la juxtaposition des plateformes intérieures 24 des secteurs 20 et une virole extérieure formée par la juxtaposition des plateformes extérieures 26 des secteurs 20.

La virole intérieure et la virole extérieure forment entre elles une veine 45 d'écoulement de fluide à l'intérieur de laquelle le flux gazeux F s'écoule lors du fonctionnement de la turbine 1.

Dans tout le texte, les termes « amont » et « aval » sont utilisés en référence au sens d'écoulement de flux gazeux F dans la veine 45 indiqué par une flèche.

Les plateformes intérieures 24 formant la virole intérieure de l'étage distributeur 2 comprennent chacune une première portion 241 et une seconde portion 242 en contact l'une de l'autre et solidaires du secteur d'anneau 20. Les première et seconde portions 241 et 242 peuvent être moulées ensemble ou bien tissées ensemble ou bien solidarisées ensemble différemment lors de la consolidation par voie gazeuse ou lors de l'opération d'infiltration dite de « Melt Infiltration » en anglais du secteur d'anneau et correspondant à une remontée de silicium par voie liquide grâce à la capillarité au sein du textile.

Les plateformes intérieures 24 présentent chacune une surface extérieure 24e destinée à être en contact avec le flux gazeux F et formée par la surface de la première portion 241 des plateformes intérieures 24 orientée radialement vers l'extérieur, et donc disposée radialement en regard des plateformes extérieures 26 formant la virole extérieure. Les plateformes intérieures 24 présentent en outre une surface intérieure 24i disposée en regard de l'axe de rotation de la turbine 1, et formée par la surface de la seconde portion 242 des plateformes intérieures 24 orientée radialement vers l'intérieure.

Les plateformes extérieures 26 comprennent chacune une première portion 261 et une seconde portion 262 solidaires du secteur d'anneau 20. Les première et seconde portions 261 et 262 des plateformes extérieures 26 peuvent être moulées ou tissées ou bien solidarisées avec le secteur d'anneau 20 lors de sa conception. Les plateformes extérieures 26 présentent chacune une surface extérieure 26e disposée en regard du carter 4 et formée par la surface de la seconde portion 262 des plateformes extérieures 26 orientée radialement vers l'extérieure. Les plateformes extérieures 26 présentent en outre une surface intérieure 26i destinée à être en contact avec le flux gazeux F et formée par la surface de la première portion 261 des plateformes extérieures 26 orientée radialement vers l'intérieure, et donc disposée radialement en regard des plateformes intérieures 24 formant la virole intérieure et en regard de l'axe de rotation de la turbine 1.

Les secteurs 20 formant l'étage distributeur 2, la plateforme intérieure 24 de chaque secteur 20 présente donc une portion de la surface extérieure et une portion de la surface intérieure de la virole extérieure, et la plateforme extérieure 26 de chaque secteur 20 présente également une portion de la surface extérieure et une portion de la surface intérieure de la virole intérieure. La pale 28 de chaque secteur 20 s'étend entre la surface extérieure 24e de la plateforme intérieure 24 du secteur d'anneau 20 et la surface intérieure 26i de la plateforme extérieure 26 du secteur d'anneau 20, et une extension 280 de la pale 28 s'étend également entre la première portion 261 et la seconde portion 262 de la plateforme extérieure 26.

L'étage redresseur 2 comprend en outre une virole métallique interne 5 et une virole métallique externe 9 entre lesquelles s'étend la couronne formée par l'assemblage des secteurs d'anneau 20 de l'étage distributeur 2. La virole métallique interne 5 est solidaire du carter 4.

La virole métallique interne 5 présente une portion annulaire s'étendant dans la direction axiale D_{A} et dans la direction circonférentielle D_{C} et comprenant à chaque extrémité 51 et 52 selon la direction axiale D_{A}, c'est-à-dire à une extrémité amont 51 et une extrémité aval 52, une patte d'accrochage amont 53 et une patte d'accrochage aval 54 s'étendant dans la direction radiale D_{R} vers l'extérieur, c'est-à-dire vers la plateforme intérieure 24, et plus particulièrement sa surface intérieure 24i, de la couronne de secteurs d'anneau 20, et vers la virole métallique externe 9.

La seconde portion 242 de la plateforme intérieure 24 du secteur d'anneau 20 présente, dans la direction axiale D_{A}, une extrémité amont 2421 et une extrémité aval 2422 présentant chacune une patte 243 et 244 s'étendant en saillie dans la direction radiale D_{R} vers l'intérieur.

La patte d'accrochage amont 53 présente une surface amont 530 et une surface aval 535, la surface aval 535 étant en appui contre l'extrémité amont 2421 de la seconde portion 242 de la plateforme intérieure 24 du secteur d'anneau 20, et plus particulièrement contre une surface amont 2430 de la patte amont 243 en saillie de l'extrémité amont 241 de la plateforme intérieure 24.

La virole métallique interne 5 comprend en outre une portion 55 en saillie dans la direction radiale D_{R} vers l'intérieur dans le prolongement de la patte d'accrochage aval 54. La portion en saillie 55 et la patte d'accrochage aval 54 sont dans le même plan radial défini par la direction radiale D_{R} et la direction circonférentielle D_{C}.

La patte d'accrochage aval 54 présente une surface amont 540 et une surface aval 545. La surface aval 545 est en appui contre la patte aval 244 via une première section d'anneau en tôle 71, la patte aval 244 étant formée à l'extrémité aval 242 de la plateforme intérieure 24 du secteur d'anneau 20. La première section d'anneau en tôle 71 est ainsi intercalée entre la patte aval 244 et la surface aval 545 de la patte d'accrochage aval 54 de la virole métallique interne 5.

L'étage redresseur 2 comprend une pluralité de premières sections d'anneau en tôle 71 formant ensemble une première couronne en tôle, deux premières sections d'anneau en tôle 71 de la première couronne en tôle étant séparées par un premier espace inter-secteur 73.

Pour maintenir la plateforme intérieure 24 en position, la virole métallique interne 5 comprend en outre un anneau de verrouillage 56 qui peut être réalisé en une seule pièce ou être circonférentiellement sectorisé. L'anneau de verrouillage 56 comprend une surface amont 560 plane s'étendant dans la direction radiale D_{R} disposée en regard de la surface aval 545 de la patte d'accrochage 54 et une surface aval 565 opposée à la surface amont 560. La surface amont 560 est en appui contre la patte aval 244 via une seconde section d'anneau en tôle 72. La seconde section d'anneau en tôle 72 est ainsi intercalée entre la patte aval 244 et la surface amont 560 de l'anneau de verrouillage 56 de la virole métallique interne 5.

Du fait des températures relativement élevées, l'anneau de verrouillage 56 est réalisé dans un matériau à base de nickel ou de cobalt. Le matériau de l'anneau de verrouillage 56 présente de préférence un module d'Young qui permet d'avoir un bon compromis entre souplesse et raideur, pour à la fois ne pas trop contraindre le CMC et ne pas trop autoriser de mouvement.

L'étage redresseur 2 comprend une pluralité de secondes sections d'anneau en tôle 72 formant ensemble une seconde couronne en tôle, deux secondes sections d'anneau en tôle 72 de la seconde couronne en tôle étant séparées par un second espace inter-secteur 74.

L'anneau de verrouillage 56 est fixé à l'aide de vis 57 et d'écrous 58, les vis 55 traversant chacune successivement l'anneau de verrouillage 56, une seconde section d'anneau en tôle 72, une première section d'anneau en tôle 71 et la portion en saillie 55 radialement vers l'intérieur de la virole métallique interne 5 via quatre trous coaxiaux 75 à 78 réalisés respectivement dans l'anneau de verrouillage 56, une seconde section d'anneau en tôle 72, une première section d'anneau en tôle 71 et dans la portion en saillie 55 radialement vers l'intérieur de la virole métallique interne 5. Les trous 75 à 78 peuvent être circulaires ou oblongs.

La virole métallique interne 5 est configurée pour que le serrage de l'anneau de verrouillage 56 contre la portion en saillie 55 radialement vers l'intérieur de la virole métallique interne 5 via l'écrou 58 et la vis 57 permettent de prendre en étau la patte aval 244 en saillie radiale de l'extrémité aval 242 de la plateforme intérieure 24 du secteur d'anneau 20 entre deux mâchoires formées par la patte d'accrochage aval 54, d'une part, et l'anneau de verrouillage 56 d'autre part.

La plateforme intérieure 24, et plus particulièrement sa seconde portion 242, est ainsi prise en étau dans la direction axiale D_{A} à l'aide d'une pince axiale de la virole métallique interne de support 5 formée par la patte d'accrochage amont 53 et l'ensemble formé de la patte d'accrochage aval 54 et l'anneau de verrouillage 56. Cette configuration permet d'appliquer une contrainte axiale vers l'aval à chaque secteur d'anneau 20 pour maintenir axialement en position les secteurs d'anneau 20.

Dans le premier mode de réalisation illustré sur les figures 1 à 4, la virole métallique interne 5 comprend ainsi un joint annulaire 70 formé par les premières et secondes sections d'anneau en tôle 71 et 72 et conformé pour s'intercaler entre la patte d'accrochage aval 54 et la patte aval 244, entre la patte aval 244 et l'anneau de verrouillage 56, et entre la portion 55 en saillie radiale vers l'intérieur et l'anneau de verrouillage 56.

Les premières sections d'anneau en tôle 71 et les secondes sections d'anneau en tôle 72 sont agencées de manière à éviter tout alignement selon la direction axiale D_{A} des premiers espaces inter-secteurs 73 avec les seconds espaces inter-secteurs 74, l'entrelacement des premières sections et des secondes sections en tôle 71 et 72 permettant de garantir l'étanchéité entre la cavité sous l'anneau en CMC, c'est-à-dire radialement à l'intérieur des secteurs d'anneau 20 en CMC, cette cavité étant repérée par la référence C1 sur la figure 1, et la cavité en aval de l'anneau de distribution, c'est-à-dire en aval de l'étage de distribution 2, cette cavité étant repérée par la référence C2 sur la figure 1.

En outre, l'anneau de verrouillage 56 comprend des fentes radiales 562 s'étendant sur une partie de la longueur radiale de la couronne depuis une extrémité radialement externe 564 de l'anneau de verrouillage 56. L'anneau de verrouillage 56 est disposée pour que chaque fente radiale 562 sépare deux secteurs d'anneau 20 de l'étage distributeur 2. Les fentes radiales 562 dans l'anneau de verrouillage 56 permettent d'augmenter la souplesse cette dernière.

Dans une variante l'anneau de verrouillage 56 pourrait comprendre un nombre de fentes radiales 562 moins important, les fentes radiales et l'anneau de verrouillage étant disposés pour que chaque fente radiale 562 sépare deux couples de secteurs d'anneau 20 de l'étage distributeur 2. Ainsi une fente radiale 562 serait disposée tous les deux secteurs d'anneau 20. Autrement dit, deux fentes radiales 562 successives serait séparées l'une de l'autre dans la direction circonférentielle par une longueur égale à la longueur de deux secteurs d'anneau dans la direction circonférentielle.

La virole métallique externe 9 comprend un ergot 90 de centrage pour chaque secteur d'anneau 20. L'ergot 90 se présente sous la forme d'un pion fixé, ou solidaire, de la virole métallique externe 9. La virole métallique externe 9 présente une surface intérieure 91 et une surface extérieure 92 selon la direction radiale D_{R}. L'ergot 90 s'étend depuis la surface intérieure 91 dans la direction radiale D_{R} vers l'intérieur.

La seconde portion 262 de la plateforme extérieure 26 du secteur d'anneau 20 comprend un premier orifice 263 configuré pour coopérer avec un ergot 90 de centrage de la virole métallique externe 9. Lorsque l'étage redresseur 2 est assemblé, la surface extérieure 26e de la plateforme extérieure 26 du secteur d'anneau 20 est en appui contre la surface intérieure 91 de la virole métallique externe 9 et l'ergot 90 de centrage traverse l'orifice correspondant de la virole métallique externe 9 et le premier orifice 263 de la seconde portion 262 de la plateforme extérieure 26.

En outre, pour solidariser le secteur d'anneau 20 à la virole métallique externe 9, la seconde portion 262 de la plateforme extérieure 26 du secteur d'anneau comprend un second orifice 264 destiné à coopérer avec une vis 95 traversant la virole métallique externe 9 au travers d'un premier orifice 93 de la virole métallique externe 9 et le second orifice 264 de la seconde portion 262 de la plateforme extérieure 26 du secteur d'anneau 20. La vis 95 coopère avec un écrou 96 pour solidariser la virole métallique externe 9 et le secteur d'anneau 20 ensemble.

La vis 95 et l'ergot 90 d'un même secteur d'anneau 20 sont disposés de part et d'autre de l'extension 280 de l'aube 28 du secteur d'anneau 20 pour améliorer le blocage du secteur d'anneau autour d'un axe radial. De même le second orifice 264 et le premier orifice 263 de la seconde portion 262 de la plateforme intérieure 26 sont disposés de part et d'autre de l'extension 280 de l'aube 28 du secteur d'anneau 20.

Comme cela est illustré sur la figure 2, chaque pale 28 possède un profil creux présentant un logement intérieur 285 s'étendant sur toute la hauteur de la pale 28, c'est-à-dire entre la plateforme intérieure 24 et la plateforme extérieure 26 du secteur d'anneau 20. La plateforme intérieure 24 de chaque secteur d'anneau 20 comprend un orifice 245 dont la forme correspond à la section du logement intérieur 285 dans le plan dans lequel s'étend la plateforme intérieure 24. De même, la plateforme extérieure 26 de chaque secteur d'anneau 20 comprend un orifice 265 dont la forme correspond à la section du logement intérieur 285 dans le plan dans lequel s'étend la plateforme intérieure 26. Les orifices 245 et 265 des plateformes intérieure 24 et extérieure 26 sont réalisés dans le prolongement du logement intérieur 285 de la pale 28.

Le logement intérieur 285 de la pale 28 et les orifices 245 et 265 des plateformes intérieure 24 et extérieure 26 peuvent être raccordés à un système de refroidissement délivrant un flux d'air de refroidissement depuis le carter 4 jusque dans la pale 28 et les plateformes intérieure 24 et extérieure 26.

Comme illustré sur les figures 1 à 4, la turbine 1 comprend en outre, pour chaque secteur d'anneau 20, un mât 6 s'étendant dans la direction radiale D_{R}. Le mât 6 comprend une tête de mât 61 en appui sur la surface extérieure 92 de la virole métallique externe 9, et une tige 62 s'étendant en saillie depuis la tête 61 dans la direction radiale D_{R} vers l'intérieur et configurée pour traverser la virole métallique externe 9, le logement intérieur 285 de la pale 28 et les orifices 245 et 265 des plateformes intérieure 24 et extérieure 26 étant alignés avec le logement intérieur 285 de la pale 28.

Le mât 6 comprend en outre une portion en saillie 63 s'étendant dans un plan transverse à la direction radiale D_{R} selon laquelle le mât 6 s'étend. Dans le mode de réalisation illustré, la portion en saillie 63 du mât 6 forme un épaulement annulaire s'étendant sur une portion du mât 6 destinée à être dans le logement intérieur 285 de la pale 28. La portion en saillie 63 du mât 6 forme une excroissance dont au moins une partie est en contact avec la pale 28 pour maintenir la pale 28 en position.

En outre, la virole interne de support 5 comprend des orifices 500 configurés pour recevoir les mâts 6. Chaque mât 6 permet de fournir un moyen de fixation du secteur 20 d'anneau en CMC par le haut, c'est-à-dire au carter 4, tout en minimisant le moment de flexion, dans la mesure où la longueur de flexion est diminuée de moitié environ de par le mât 6 traversant le secteur annulaire. Chaque secteur 20 d'anneau de l'étage distributeur est ainsi maintenu de façon déterministe, c'est-à-dire de manière à éviter que le secteur d'anneau 20 se mette à vibrer et en maîtrisant sa position, et cela tout en permettant au secteur d'anneau 20 de se déformer sous les effets de la température et de la pression entre autre indépendamment des pièces métalliques en interface.

Dans le cas où chaque secteur d'anneau comprenait plusieurs pales, la turbine comprendrait, au plus, un nombre de mâts correspondant pour chaque secteur d'anneau de distributeur.

Dans le mode de réalisation illustré sur les figures 1 à 4, la plateforme extérieure 26 du secteur d'anneau 20 comprend en outre un premier et un second renforts 266 et 267 disposés de part et d'autre de l'extension 280 de pale 28 et radialement entre la première portion 261 et la seconde portion 262 de la plateforme extérieure 26. Chacun des deux renforts 266 et 267 comprend une première paroi, respectivement 2662 et 2672, en appui contre une face radialement externe de la première portion 261 de la plateforme externe 26, c'est-à-dire la face de la première portion 261 en regard de la seconde portion 262 de la plateforme extérieure 26, et une seconde paroi, respectivement 2664 et 2674, en appui contre une face radialement interne de la seconde portion 261 de la plateforme externe 26, c'est-à-dire dire la face de la seconde portion 262 en regard de la première portion 261 de la plateforme extérieure 26.

La seconde paroi 2664 du premier renfort 266 comprend un orifice 2666 destiné à être coaxial avec le premier orifice 263 de la seconde portion 262 de la plateforme extérieure 26 et traversé par l'ergot de centrage 90. La seconde paroi 2674 du second renfort 267 comprend un orifice 2676 destiné à être coaxial avec le second orifice 264 de la seconde portion 262 de la plateforme extérieure 26 et traversé par la vis 95, l'écrou 96 venant en appui sur une surface radialement interne de la seconde paroi 2674 du second renfort 267.

Les premier et second renforts 266 et 267 peuvent être rapportées lors de la phase de consolidation par voie gazeuse ou lors de l'opération de « Melt Infiltration » et ainsi solidaire du secteur d'anneau 20.

Dans le premier mode de réalisation illustré sur les figures 1 à 4, le secteur d'anneau 20 comprend en outre une encoche 29 réalisée dans la seconde portion 262 de la plateforme extérieure 26 et dans la seconde paroi 2664 du premier renfort 266, et la virole métallique externe 9 comprend, pour chaque secteur d'anneau 20, une butée 94 configurée pour coopérer avec l'encoche 29 de la plateforme extérieure 26 du secteur d'anneau 20. L'encoche 29 s'étend dans un plan comprenant la direction axiale D_{A} et la direction circonférentielle D_{C} et la butée 94 s'étend dans un plan comprenant la direction axiale D_{A} et la direction radiale D_{R}.

En outre, la première portion 261 de la plateforme extérieure 26 comprend une portion principale 2610 définissant une paroi externe de la veine 45 d'écoulement du flux gazeux F et une portion radiale 265 s'étendant en saillie dans la direction radiale D_{R} vers l'extérieur depuis une extrémité axiale amont 2611 de la première portion 261.

L'invention fournit ainsi une turbine de turbomachine comprenant un étage distributeur de turbine en CMC dont le montage est simplifié et adapté pour maintenir les secteurs d'anneau de façon déterministe tout en permettant au secteur d'anneau de se déformer indépendamment des pièces métalliques en interface.

## Revendications

1. Turbine (1) de turbomachine comprenant un carter (4) et un étage distributeur de turbine (2), l'étage distributeur (2) de turbine (1) comportant une virole externe de support (9) en métal et solidaire du carter (4), une virole interne de support (5) en métal, et une pluralité de secteurs (20) d'anneau en matériau composite à matrice céramique formant une couronne et s'étendant entre la virole externe de support (9) et la virole interne de support (5), les secteurs (20) définissant une direction axiale (D_{A}) et une direction radiale (D_{R}), et chaque secteur (20) ayant une plateforme intérieure (24), une plateforme extérieure (26) fixée à la virole externe de support (9), et au moins une pale (28) s'étendant entre la plateforme extérieure (26) et la plateforme intérieure (24) et fixée à celles-ci, les plateformes intérieures (24) et les plateformes extérieures (26) des secteurs (20) délimitant une veine (45) d'écoulement d'un fluide (F),
**caractérisée en ce que** :
- la plateforme extérieure (26) de chaque secteur (20) comprend une première portion (261) dotée d'une face interne (26i) formant la surface externe de la veine (45) d'écoulement de fluide (F), et une seconde portion (262) radialement distante et externe à la première portion (261), la seconde portion (262) de la plateforme extérieure (26) étant fixée à la virole externe de support (9),
- la plateforme intérieure (24) de chaque secteur (20) comprend une première patte (243) et une seconde patte (244) s'étendant selon la direction radiale (D_{R}) en saillie vers l'intérieur depuis respectivement une extrémité axiale amont (2421) et une extrémité axiale aval (2422) de la plateforme intérieure (24), et
- la virole interne de support (5) comprend un épaulement (53) s'étendant en saillie dans la direction radiale (D_{R}) vers l'extérieur et étant positionné en amont et en butée dans la direction axiale (D_{A}) contre ladite première patte (243), et une pince axialement en aval de l'épaulement (53) et comportant deux mâchoires (54, 56) s'étendant dans la direction radiale (D_{R}) vers l'extérieur et maintenues en contrainte l'une vers l'autre contre la seconde patte (244) de la plateforme intérieure (24).

2. Turbine (1) selon la revendication 1, dans laquelle les mâchoires (54, 56) de la virole interne de support (5) sont maintenues ensemble à l'aide d'une vis traversant les deux mâchoires et coopérant avec un écrou.

3. Turbine (1) selon l'une des revendications 1 ou 2, dans laquelle la virole interne de support (5) comprend en outre des premières sections d'anneau en tôle (71) et des secondes sections d'anneau en tôle (72) insérées entre les deux mâchoires (54, 56), chaque seconde patte (244) de plateforme intérieure (24) étant disposée selon la direction axiale (D_{A}) entre une première et une seconde sections d'anneau en tôle (71, 72).

4. Turbine (1) selon la revendication 3, dans laquelle les premières sections d'anneau en tôle (71) forment une première couronne en tôle présentant des premiers espaces s'étendant radialement entre lesdites premières sections d'anneau en tôle (71) et les secondes sections d'anneau en tôle (72) forment une seconde couronne en tôle présentant des seconds espaces (74) s'étendant radialement entre lesdites secondes sections d'anneau en tôle (72), les premiers espaces (73) et les seconds espaces (74) étant décalés selon la direction axiale (D_{A}).

5. Turbine (1) selon l'une des revendications 1 à 4, dans laquelle une première mâchoire (54) des deux mâchoires (54, 56) est solidaire de l'épaulement (53) de la virole interne de support (5) via une portion centrale, et une seconde mâchoire (56) des deux mâchoires (54, 56) comprend une couronne dotée de fentes radiales (562) s'étendant sur au moins une partie de la longueur radiale de la couronne.

6. Turbine (1) selon les revendications 4 et 5, dans lequel les fentes radiales (562) de la seconde mâchoire (56) sont décalées selon la direction axiale (D_{A}) par rapport aux seconds espaces (74) et/ou aux premiers espaces (73).

7. Turbine (1) selon l'une des revendications 5 ou 6, dans laquelle chaque fente radiale (562) sépare deux secteurs (20) successifs de l'étage distributeur (2).

8. Turbine (1) selon l'une des revendications 1 à 7, dans laquelle ladite au moins une pale (28) de chaque secteur (20) présente un profil creux définissant un logement interne (285) s'étendant entre la plateforme intérieure (24) et la plateforme extérieure (26), les plateformes intérieure et extérieure (24, 26) de chaque secteur (20) présentent chacune un orifice (245, 265) communiquant avec ledit logement (285) interne de ladite au moins une pale (28), et chaque secteur (20) de l'étage distributeur (2) comprend au moins un mât (6) traversant lesdits orifices (245, 265) des plateformes (24, 26) et le logement interne (285) de ladite au moins une pale (28), ledit mât (6) étant fixé audit carter (4) et en liaison avec ledit secteur (20) et ladite virole interne de support (5).

9. Turbine (1) selon la revendication 8, dans laquelle le mât (6) comprend au moins une portion (63) en saillie dans la direction axiale en liaison avec la pale (28) pour maintenir la pale (28) en position.

10. Turbine (1) selon l'une des revendications 8 ou 9, dans laquelle la virole interne de support (5) comprend une couronne perforée (59) comportant des orifices (590) de réception d'une extrémité du mât (6), et une bague de maintien (50) sur laquelle est montée la couronne (59).

11. Turbine (1) selon l'une des revendications 1 à 10, dans laquelle la plateforme extérieure (26), la pale (28) et la plateforme intérieure (24) sont formées en une seule et même pièce de tissage de matériau composite à matrice céramique.

12. Turbomachine comprenant au moins une turbine (1) de turbomachine selon l'une des revendications 1 à 11.

## Patentansprüche

1. Turbine (1) für eine Turbomaschine, umfassend ein Gehäuse (4) und eine Turbinenleitrad-Stufe (2), wobei die Leitrad-Stufe (2) der Turbine (1) einen äußeren Stützmantel (9) aus Metall, der mit dem Gehäuse (4) fest verbunden ist, einen inneren Stützmantel (5) aus Metall, und mehrere Ringsektoren (20) aus Verbundmaterial mit keramischer Matrix beinhaltet, die einen Kranz bilden und sich zwischen dem äußeren Stützmantel (9) und dem inneren Stützmantel (5) erstrecken, wobei die Sektoren (20) eine axiale Richtung (D_{A}) und eine radiale Richtung (D_{R}) definieren, und jeder Sektor (20) eine innere Plattform (24), eine äußere Plattform (26), die an dem äußeren Stützmantel (9) fixiert ist, und zumindest ein Blatt (28) aufweist, das sich zwischen der äußeren Plattform (26) und der inneren Plattform (24) erstreckt und an diesen fixiert ist, wobei die inneren Plattformen (24) und die äußeren Plattformen (26) der Sektoren (20) einen Gang (45) für die Strömung eines Fluids (F) begrenzen,
**dadurch gekennzeichnet, dass**:
- die äußere Plattform (26) eines jeden Sektors (20) einen ersten Abschnitt (261), der mit einer Innenfläche (26i) versehen ist, welche die äußere Oberfläche des Gangs (45) für die Strömung des Fluids (F) bildet, sowie einen zweiten Abschnitt (262) umfasst, der radial von dem ersten Abschnitt (261) beabstandet ist und sich außerhalb davon befindet, wobei der zweite Abschnitt (262) der äußeren Plattform (26) an dem äußeren Stützmantel (9) fixiert ist,
- die innere Plattform (24) eines jeden Sektors (20) eine erste Lasche (243) und eine zweite Lasche (244) umfasst, die sich gemäß der radialen Richtung (D_{R}) von jeweils einem stromaufwärtigen axialen Ende (2421) und einem stromabwärtigen axialen Ende (2422) der inneren Plattform (24) nach innen wegragend erstrecken, und
- der innere Stützmantel (5) eine Schulter (53), die sich in der radialen Richtung (D_{R}) nach außen wegragend erstreckt und stromaufwärts und in der axialen Richtung (D_{A}) gegen die erste Lasche (243) positioniert ist, und eine Klemme axial stromabwärts der Schulter (53) umfasst, die zwei Klemmbacken (54, 56) beinhaltet, die sich in der radialen Richtung (D_{R}) nach außen erstrecken und gegeneinander gespannt gegen die zweite Lasche (244) der inneren Plattform (24) gehalten werden.

2. Turbine (1) nach Anspruch 1, wobei die Klemmbacken (54, 56) des inneren Stützmantels (5) mithilfe einer Schraube zusammengehalten werden, welche die zwei Klemmbacken durchquert und mit einer Mutter zusammenwirkt.

3. Turbine (1) nach einem der Ansprüche 1 oder 2, wobei der innere Stützmantel (5) ferner erste Ringsektionen aus Blech (71) und zweite Ringsektionen aus Blech (72) umfasst, die zwischen die zwei Klemmbacken (54, 56) eingesetzt sind, wobei jede zweite Lasche (244) der inneren Plattform (24) gemäß der axialen Richtung (D_{A}) zwischen einer ersten und einer zweiten Ringsektion aus Blech (71, 72) angeordnet ist.

4. Turbine (1) nach Anspruch 3, wobei die ersten Ringsektionen aus Blech (71) einen ersten Kranz aus Blech bilden, der erste Zwischenräume aufweist, die sich radial zwischen den ersten Ringsektionen aus Blech (71) erstrecken, und die zweiten Ringsektionen aus Blech (72) einen zweiten Kranz aus Blech bilden, der zweite Zwischenräume (74) aufweist, die sich radial zwischen den zweiten Ringsektionen aus Blech (72) erstrecken, wobei die ersten Zwischenräume (73) und die zweiten Zwischenräume (74) gemäß der axialen Richtung (D_{A}) versetzt sind.

5. Turbine (1) nach einem der Ansprüche 1 bis 4, wobei eine erste Klemmbacke (54) der zwei Klemmbacken (54, 56) fest mit der Schulter (53) des inneren Stützmantels (5) über einen zentralen Abschnitt verbunden ist, und eine zweite Klemmbacke (56) der zwei Klemmbacken (54, 56) einen Kranz umfasst, der mit radialen Schlitzen (562) versehen ist, die sich über zumindest einen Teil der radialen Länge des Kranzes erstrecken.

6. Turbine (1) nach den Ansprüchen 4 und 5, wobei die radialen Schlitze (562) der zweiten Klemmbacke (56) gemäß der axialen Richtung (D_{A}) in Bezug auf die zweiten Zwischenräume (74) und/oder die ersten Zwischenräume (73) versetzt sind.

7. Turbine (1) nach einem der Ansprüche 5 oder 6, wobei jeder radiale Schlitz (562) zwei aufeinanderfolgende Sektoren (20) der Leitrad-Stufe (2) voneinander trennt.

8. Turbine (1) nach einem der Ansprüche 1 bis 7, wobei das zumindest eine Blatt (28) eines jeden Sektors (20) ein Hohlprofil aufweist, das eine innere Aufnahme (285) definiert, die sich zwischen der inneren Plattform (24) und der äußeren Plattform (26) erstreckt, die inneren und äußeren Plattformen (24, 26) eines jeden Sektors (20) jeweils eine Öffnung (245, 265) aufweisen, die mit der inneren Aufnahme (285) des zumindest einen Blatts (28) in Kommunikation steht, und jeder Sektor (20) der Leitrad-Stufe (2) zumindest einen Stiel (6) umfasst, der die Öffnungen (245, 265) der Plattformen (24, 26) und die innere Aufnahme (285) des zumindest einen Blatts (28) durchquert, wobei der Stiel (6) an dem Gehäuse (4) fixiert ist und mit dem Sektor (20) und dem inneren Stützmantel (5) in Verbindung steht.

9. Turbine (1) nach Anspruch 8, wobei der Stiel (6) zumindest einen Abschnitt (63) umfasst, der in der axialen Richtung in Verbindung mit dem Blatt (28) wegragt, um das Blatt (28) in Position zu halten.

10. Turbine (1) nach einem der Ansprüche 8 oder 9, wobei der innere Stützmantel (5) einen perforierten Kranz (59) umfasst, der Öffnungen (590) zur Aufnahme eines Endes des Stiels (6) beinhaltet, und einen Haltering (50), an welchem der Kranz (59) montiert ist.

11. Turbine (1) nach einem der Ansprüche 1 bis 10, wobei die äußere Plattform (26), das Blatt (28) und die innere Plattform (24) aus ein und demselben Gewebestück aus Verbundmaterial mit keramischer Matrix gebildet sind.

12. Turbomaschine, umfassend zumindest eine Turbine (1) für eine Turbomaschine nach einem der Ansprüche 1 bis 11.

## Claims

1. A turbine (1) of a turbo engine comprising a casing (4) and a turbine nozzle stage (2), the turbine (1) nozzle stage (2) including an outer support shroud (9) made of metal and secured to the casing (4), an inner support shroud (5) made of metal, and a plurality of ring sectors (20) made of ceramic-matrix composite material forming a crown and extending between the outer support shroud (9) and the inner support shroud (5), the sectors (20) defining an axial direction (D_{A}) and a radial direction (D_{R}), and each sector (20) having an internal platform (24) and an external platform (26) fixed to the outer support shroud (9) and at least one blade (28) extending between the external platform (26) and the internal platform (24) and fixed thereto, the internal platforms (24) and the external platforms (26) delimiting a fluid (F) flowpath (45),
**characterized in that**:
- the external platform (26) of each sector (20) comprises a first portion (261) equipped with an inner face (26i) forming the outer surface of the fluid (F) flowpath (45), and a second portion (262) radially distant and external to the first portion (261), the second portion (262) of the external platform (26) being fixed to the outer support shroud (9),
- the internal platform (24) of each sector (20) comprises a first tab (243) and a second tab (244) extending along the radial direction (D_{R}) protruding inwardly from respectively an upstream axial end (2421) and a downstream axial end (2422) of the internal platform (24), and
- the inner support shroud (5) comprises a shoulder (53) protruding in the radial direction (D_{R}) outwardly and being positioned upstream and in abutment in the axial direction (D_{A}) against said first tab (243), and a clamp axially downstream of the shoulder (53) and including two jaws (54, 56) extending in the radial direction (D_{R}) outwardly and held under stress towards each other against the second tab (244) of the internal platform (24).

2. The turbine (1) according to claim 1, wherein the jaws (54, 56) of the inner support shroud (5) are held together by means of a screw passing through the two jaws and cooperating with a nut.

3. The turbine (1) according to any of claims 1 or 2, wherein the inner support shroud (5) further comprises first sheet ring sections (71) and second sheet ring sections (72) inserted between the two jaws (54, 56), each second tab (244) of the internal platform (24) being disposed along the axial direction (D_{A}) between a first and a second sheet ring section (71, 72).

4. The turbine (1) according to claim 3, wherein the first sheet ring sections (71) form a first sheet crown having first spaces extending radially between said first sheet ring sections (71) and the second sheet ring sections (72) form a second sheet crown having second spaces (74) extending radially between said second sheet ring sections (72), the first spaces (73) and the second spaces (74) being offset along the axial direction (D_{A}).

5. The turbine (1) according to any of claims 1 to 4, wherein a first jaw (54) of the two jaws (54, 56) is secured to the shoulder (53) of the inner support shroud (5) via a central portion, and a second jaw (56) of the two jaws (54, 56) comprises a crown equipped with radial slots (562) extending over at least a portion of the radial length of the crown.

6. The turbine (1) according to claims 4 and 5, wherein the radial slots (562) of the second jaw (56) are offset along the axial direction (D_{A}) relative to the second spaces (74) and/or to the first spaces (73).

7. The turbine (1) according to any of claims 5 or 6, wherein each radial slot (562) separates two successive sectors (20) of the nozzle stage (2).

8. The turbine (1) according to any of claims 1 to 7, wherein said at least one blade (28) of each sector (20) has a hollow profile defining an inner housing (285) extending between the internal platform (24) and the external platform (26), the internal and external platforms (24, 26) of each sector (20) each have an orifice (245, 265) communicating with said inner housing (285) of said at least one blade (28), and each sector (20) of the nozzle stage (2) comprises at least one mast (6) passing through said orifices (245, 265) of the platforms (24, 26) and the inner housing (285) of said at least one blade (28), said mast (6) being fixed to said casing (4) and in connection with said sector (20) and said inner support shroud (5).

9. The turbine (1) according to claim 8, wherein the mast (6) comprises at least one portion (63) protruding in the axial direction in connection with the blade (28) to hold the blade (28) in position.

10. The turbine (1) according to any of claims 8 or 9, wherein the inner support shroud (5) comprises a perforated crown (59) including orifices (590) for receiving one end of the mast (6), and a retaining ring (50) on which the crown (59) is mounted.

11. The turbine (1) according to any of claims 1 to 10, wherein the external platform (26), the blade (28) and the internal platform (24) are formed in a single weaving part of ceramic-matrix composite material.

12. A turbo engine comprising at least one turbine (1) of a turbo engine according to any of claims 1 to 11.
